# EUROPÄISCHE PATENTANMELDUNG

(11) **EP 1 235 012 A2**
(43) Veröffentlichungstag der Anmeldung: **28.08.2002**
(21) Anmeldenummer: 02003488.0
(22) Anmeldetag: 15.02.2002
(51) Int. Cl.: F16K 1/12, F16K 1/42, F16K 31/06

(54) **Koaxialventil**

(30) Priorität: 22.02.2001 DE 10108492
(71) Anmelder: müller co-ax AG, 74670 Forchtenberg (DE)
(72) Erfinder: Fauser, Hans-Peter, 74653 Ingelfingen (DE); Köhler, Udo, 74670 Forchtenberg (DE); Kern, Dieter, 74670 Forchtenberg (DE)
(74) Vertreter: Patentanwälte Ruff, Wilhelm, Beier, Dauster & Partner

(57) **Zusammenfassung**

Bei einem Koaxialventil ist vorgesehen, die mit dem Ende des rohrförmigen Ventilschließkörpers (6) zusammenwirkende Ventilsitzfläche des Ventilsitzes (10) nicht eben auszugestalten, sondern von der ebenen Form abweichend. Insbesondere wird vorgesehen, die Ventilsitzfläche auf einer Kegelfläche oder Kugelfläche anzuordnen.

## Beschreibung

Die Erfindung geht aus von einem Koaxialventil, bei dem in einem Ventilgehäuse ein rohrförmiger Verschließkörper mit einem Ventilsitz zusammenwirkt. Koaxialventile haben den Vorteil, dass ihre Öffnungs- und Schließcharakteristik unabhängig vom Druck des Mediums ist. Sie werden daher auch druckentlastete Ventile genannt.

Bei den Koaxialventilen bildet das stirnseitig Ende des rohrförmigen Verschließkörpers eine Fläche, die in geschlossenem Zustand des Ventils auf dem Ventilsitz aufliegt. Das stirnseitige Ende ist abgeschrägt, so dass fast eine linienförmige Anlage auf dem Ventilsitz gegeben ist. Bei den bekannten Koaxialventilen ist die Ventilsitzfläche des Ventilsitzes eben ausgebildet. Die Ventilsitzfläche selbst kann wegen der kantenförmigen Anlage schmal ausgebildet sein. Wegen der linienförmigen Anlage muss der Ventilschließkörper und die Ventilsitzfläche des Ventilsitzes mit großer Präzision oder elastisch hergestellt sein.

Der Erfindung liegt die Aufgabe zu Grunde, ein Koaxialventil im Hinblick auf eine gute Dichtfunktion weiter zu verbessern. Zur Lösung dieser Aufgabe schlägt die Erfindung ein Koaxialventil mit den im Anspruch 1 genannten Merkmalen vor. Weiterbildungen der Erfindung sind Gegenstand von Unteransprüchen.

Durch die von der ebenen Form abweichende Ausbildung wird erreicht, dass höhere Dichtkräfte auftreten, also Kräfte, die senkrecht zu der Ventilsitzfläche gerichtet sind. Gleichzeitig kann die Schließpräzision weiter verbessert werden.

In Weiterbildung der Erfindung kann vorgesehen sein, dass die Ventilsitzfläche gegenüber der Achse des Verschließkörpers divergierend ausgebildet ist. Dies ist eine Möglichkeit, wie man bei gleicher Antriebskraft des Ventilschließkörpers eine höhere Dichtkraft erreichen kann.

Es ist aber ebenfalls möglich und wird von der Erfindung vorgeschlagen, dass die Ventilsitzfläche gegenüber der Achse des Ventilschließkörpers konvergierend ausgebildet ist, was ebenfalls die eingangs erwähnte Aufgabe löst.

Insbesondere kann in Weiterbildung der Erfindung vorgesehen sein, dass die Ventilsitzfläche rotationssymmetrisch ausgebildet ist, vorzugsweise rotationssymmetrisch um die Achse des Ventilschließkörpers.

Erfindungsgemäß kann vorgesehen sein, dass die Ventilsitzfläche in einem Axialschnitt gesehen geradlinig ausgebildet ist.

Es kann aber ebenfalls vorgesehen sein und liegt im Rahmen der Erfindung, dass die Ventilsitzfläche in einem Axialschnitt gebogen, insbesondere kreisförmig gebogen, verläuft.

Es kann ebenfalls vorgesehen sein, dass die Ventilsitzfläche auf einem Kegel liegt, vorzugsweise auch auf einer Kugel.

Um eine weitere Verbesserung der Präzision des Schließvorgangs bzw. des Schließzustands zu erhalten, kann erfindungsgemäß in Weiterbildung der Erfindung vorgesehen sein, dass der Ventilsitz mit der Ventilsitzfläche in einer Richtung quer zur Achse des Ventilschließkörpers schwimmend gelagert ist. Es kann dadurch ein Ausgleich von Toleranzen und Ungenauigkeiten erfolgen, so dass die Präzision nochmals weiter erhöht wird.

Insbesondere kann vorgesehen sein, dass bei einer schwimmenden Lagerung die Ventilsitzfläche in einem Axialschnitt ge-radlinig ausgebildet ist, vorzugsweise auf einem Kegel liegt.
Die schwimmende Lagerung ist immer dann von Vorteil, wenn die Dichtfläche von der ebenen Form abweicht bzw. eine Zentrier-funktion aufweist.

Koaxialventile können auch als Dreiwegeventile ausgebildet sein. In diesem Fall bilden beide Enden des rohrförmigen Ventilschließkörpers jeweils zusammen mit einem Ventilsitz eine Ventileinrichtung. Hier schlägt nun die Erfindung vor, dass einer der beiden Ventilsitze schwimmend gelagert ist.

Zur Verbesserung des Verhaltens des Ventils kann vorgesehen sein, dass der Ventilschließkörper eine Lagerung aufweist, die vorzugsweise zwei im Endbereich des Ventilschließkörpers angeordnete Gleitlager aufweist. Die Gleitlagerung kann auch an der Aussenseite des Ankers angeordnet sein.

Weitere Merkmale, Einzelheiten und Vorzüge der Erfindung ergeben sich aus der folgenden Beschreibung einer bevorzugten Ausführungsformen der Erfindung, den Patentansprüchen, deren Wortlaut durch Bezugnahme zum Inhalt der Beschreibung gemacht wird, sowie anhand der Zeichnung. Hierbei zeigen:
- Fig. 1: einen Axialschnitt durch ein Koaxialventil nach der Erfindung;
- Fig. 2: in vergrößertem Maßstab einen Querschnitt durch einen Teil eines Ventilsitzes;
- Fig. 3: ebenfalls in vergrößertem Maßstab einen Querschnitt durch einen zweiten Ventilsitz;
- Fig. 4: das Zusammenwirken des einen Endes des Verschließkörpers mit seinem zugeordneten Ventilsitz;
- Fig. 5: eine der Figur 4 entsprechende Darstellung am anderen Ende des Ventilschließkörpers.

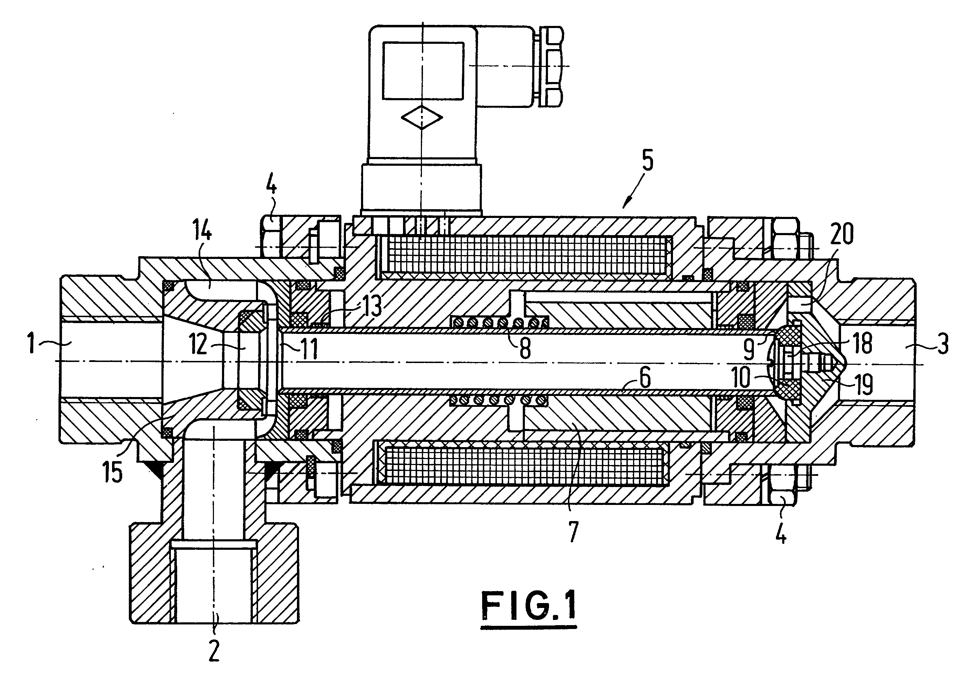

Figur 1 zeigt einen Längsschnitt durch ein Zweiwegeventil, das als Koaxialventil ausgebildet ist. Das zu steuernde Medium kann durch einen Eingang 1 in das Ventil einströmen. Das Ventil enthält einen ersten Ausgang 2 und rechts in der Figur einen zweiten Ausgang 3. Im Normalzustand, der in der Figur 1 dargestellt ist, ist der rechte Ausgang 3 geschlossen und der nach unten aus dem Ventil herausführende Ausgang 2 geöffnet. Das Ventil enthält ein Ventilgehäuse 5, das aus mehreren Teilen besteht und mit Hilfe von Schrauben 4 zusammen gehalten wird. In dem mittleren Teil des Ventilgehäuses 5 ist ein Ventilschließkörper 6 in Richtung seiner eigenen Längsachse verschiebbar gelagert. Der Ventilschließkörper 6 ist auf seiner Außenseite mit einem Anker 7 verbunden, der von einem elektromagnetischen Antrieb verschoben werden kann. Eine Druckfeder 8 drückt den Ventilschließkörper 6 in Figur 1 nach rechts in die Schließstellung mit dem dort angeordneten Ventilsitz. Die Stirnkante des Ventilschließkörpers 6 liegt auf einer Ventilsitzfläche 9 auf, die an einem Ventilsitz 10 ausgebildet ist. An dem gegenüberliegenden Ende weist der Ventilschließkörper 6 ebenfalls eine Stirnkante 11 auf, die mit einem dort gelagerten Ventilsitz 12 zur Bildung des dem Ausgang 2 zugeordneten Ventils zusammenwirkt.

Im Bereich beider Enden des Ventilschließkörpers 6 ist je-weils ein Gleitlager 13 angeordnet, das die Lagerung des Ventilschließkörpers 6 verbessert und vor allem dafür sorgt, dass der Anker 7 mit geringem radialen Spiel von dem ihn umgebenden Teil des Ventilgehäuses 5 auf Abstand gehalten wird.

In der dargestellten Position ist der Ausgang 3 aus dem Ventilgehäuse 5 geschlossen, da der Ventilschließkörper 6 auf der Ventilsitzfläche 9 des Ventilsitzes 10 aufliegt. Dagegen ist der Ausgang 2 geöffnet, da die Stirnkante 11 des Ventilschließkörpers 6 von dem entsprechenden Ventilsitz 12 einen Abstand aufweist.

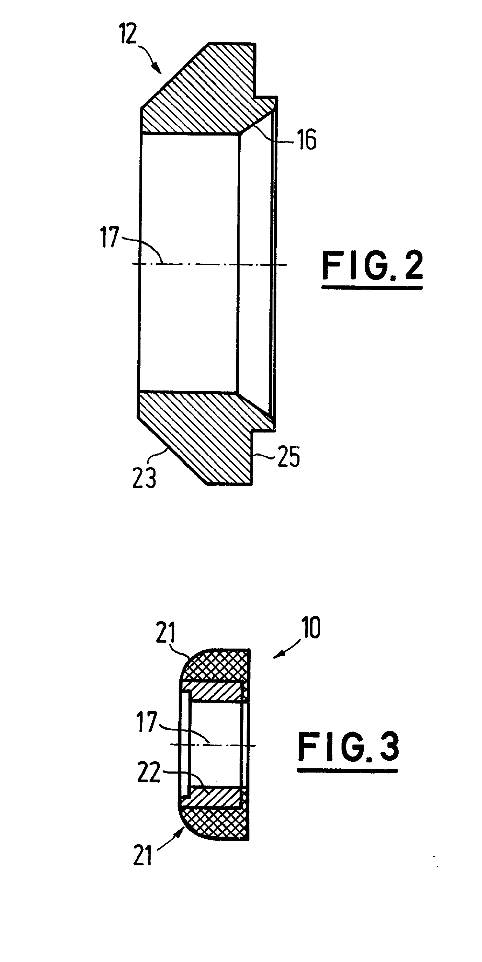

Figur 2 zeigt in größerem Maßstab den Ventilsitz 12, der an dem einen Ende des Ventilschließkörpers 6 angeordnet ist. Der Ventilsitz 12 ist als ringförmiges Element ausgebildet, das in eine in einer Sackbohrung 14 des Ventilgehäuses 5 angeordneten Aufnahme 15 mit radialem Spiel eingesetzt wird. Das ringförmige Element weist eine Ventilsitzfläche 16 auf, die auf einer Kegelfläche liegt. Die Ventilsitzfläche 16 ist rotationssymmetrisch zur angedeuteten Achse 17, die gleichzeitig die Längsachse des Ventils und die Längsachse des Ventilschließkörpers 6 ist.

Figur 3 zeigt in größerer Einzelheit den Ventilsitz 10, der mit dem anderen Ende des Ventilschließkörpers 6 zusammenwirkt. Der Ventilsitz 10 wird mit einer Schraube in eine Querwand 19 eingeschraubt. Die Querwand 19 weist axiale Durchgänge 20 auf, durch die das Medium strömen kann. Der Ventilsitz 10 weist eine Ventilsitzfläche 21 auf, die im Axialschnitt der Figur 3 abgerundet verläuft. Im dargestellten Beispiel liegt die Ventilsitzfläche 21 auf beiden Seiten der Mittelachse 17 auf einem Kreisbogen, wobei die beiden Kreisbögen nicht den gleichen Mittelpunkt haben. Die Erfindung schlägt jedoch auch vor, dass die beiden Kreisbögen im Axialschnitt den identischen Mittelpunkt haben, so dass die Ventilsitzfläche 21 auf einer Kugeloberfläche zu liegen kommt. Das den Ventilsitz 10 bildende Element kann beispielsweise aus einem Kunststoff bestehen und durch einen Ring 22 verstärkt sein, der von der erwähnten Schraube 18 festgelegt wird.

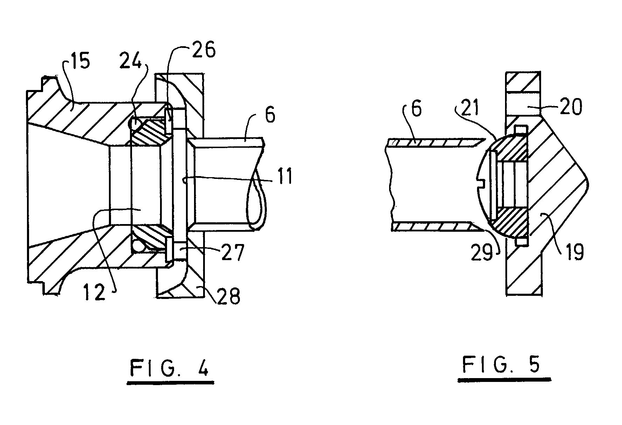

Figur 4 zeigt in einem Teilschnitt das Zusammenwirken des in Figur 1 linken Endes des Ventilschließkörpers 6 mit dem zugeordneten Ventilsitz 12. Der Ventilsitz 12 ist in einer Ausnehmung der Aufnahme 15 untergebracht. Die Ausnehmung weist einen größeren Durchmesser auf als es dem Außendurchmesser des ringförmigen Elements entspricht. Dadurch hat der Ventilsitz 12 ein Spiel in einer Richtung quer zur Längsachse des Ventilschließkörpers.

In dem Raum zwischen der schrägen der Ventilsitzfläche 16 abgewandten Außenseite 23 des Ventilsitzes 12 und der Aufnahme 15 ist eine Dichtung 24 untergebracht, die den Ventilsitz 12 gegenüber der Aufnahme 15 abdichtet. An der dem Ventilschließkörper 6 zugewandten Stirnseite enthält der Ventilsitz 12 eine Stirnfläche 25, auf der ein Gleitlager 26 aufliegt, das an einigen Stellen über Elemente 27 mit dem Niederhalter 28 zusammenwirkt. Diese Stützelemente 27 sind erforderlich, damit die Dichtung 24 das Ventilsitzelement 12 nicht aus der Halterung 15 axial ausschiebt. Der Niederhalter 28 dient dazu, das Ventilsitzelement 12 auf Abstand zu hal-ten. Der Ventilschließkörper 6 weist im Bereich seiner Stirnkante 11 eine von innen nach außen führende Abschrägung auf, so dass die Stirnkante des rohrförmigen Schließkörpers 6 tatsächlich eine scharfe Kante bildet. Wenn das Ventil durch den elektromagnetischen Antrieb betätigt wird, wird der Ver-schließkörper 6 in Figur 1 und Figur 4 nach links bewegt, so dass seine Stirnkante 11 linienförmig auf der Ventilsitz-fläche 16 des Ventilsitzes 12 anliegt. Durch die schwimmende Lagerung des Ventilsitzes 12 kann sich der Ventilsitz 12 gegenüber der Achse des Ventilschließkörpers 6 selbst zen-trieren.

Figur 5 zeigt das gegenüberliegende Ende des Ventilschließkörpers 6. Auch dort weist die Stirnkante 9 eine scharfe Kante 29 auf, die, wenn der elektromagnetischen Antrieb nicht betätigt wird, durch die Feder 8 auf die Ventilsitzfläche 21 des Ventilsitzes 10 gedrückt wird. Die Krümmung des Ventilsitzes 21 ist so gewählt, dass tatsächlich nur die scharfe Kante 29 auf der Ventilsitzfläche 21 auf liegt. Wenn die Ventilsitzfläche 21, wie dies die Erfindung vorschlägt, auf einer Kugelfläche angeordnet ist, kann hier ein gewisser Winkelausgleich zwischen der Längsachse des Ventilschließ-körpers 6 und dem Ventilsitz erfolgen. Auch dies trägt zur Verbesserung der Präzision des Ventils bei.

## Patentansprüche

1. Koaxialventil, mit
1.1 einem Ventilgehäuse (5),
1.2 einem in dem Ventilgehäuse (5) angeordneten axial verschiebbaren rohrförmigen Ventilschließkörper (6),
1.3 mindestens einem mit dem Ventilschließkörper (6) zusammenwirkenden Ventilsitz (10,12), der
1.3.1 eine zur Anlage einer Stirnkante (11, 29) des Ventilschließkörpers (6) bestimmte Ventilsitzfläche (16, 21) aufweist, die
1.3.2 von einer quer zur Achse des Ventilschließkörpers (6) verlaufenden Ebene abweicht.

2. Koaxialventil nach Anspruch 1, bei dem die Ventilsitzfläche (21) gegenüber der Achse (17) des Ventilschließkörpers (6) divergierend ausgebildet ist.

3. Koaxialventil nach Anspruch 1, bei dem die Ventilsitzfläche (16) gegenüber der Achse des Ventilschließkörpers (6) konvergierend ausgebildet ist.

4. Koavialventil nach einem der vorhergehenden Ansprüche, bei dem die Ventilsitzfläche (16, 21) rotationssymmetrisch ausgebildet ist, vorzugsweise rotationssymmetrisch um die Achse (17) des Ventilschließkörpers (6).

5. Koaxialventil nach einem der vorhergehenden Ansprüche, bei dem die Ventilsitzfläche (16) in einem Axialschnitt geradlinig ausgebildet ist.

6. Koaxialventil nach einem der Ansprüche 1 bis 4, bei dem die Ventilsitzfläche (21) in einem Axialschnitt gebogen ausgebildet ist, insbesondere kreisförmig gebogen.

7. Koaxialventil nach einem der Ansprüche 1 bis 5, bei dem die Ventilsitzfläche (16) auf einem Kegel liegt.

8. Koaxialventil nach einem der Ansprüche 1 bis 4 und 6, bei dem die Ventilsitzfläche (21) auf einerr Kugel liegt.

9. Koaxialventil nach einem der vorhergehenden Ansprüche, bei dem der Ventilsitz (12) mit der Ventilsitzfläche (16) in einer Richtung quer zur Achse (17) des Ventilschließkörpers (6) schwimmend gelagert ist.

10. Koaxialventil nach Anspruch 9, bei dem bei einer schwimmenden Lagerung die Ventilsitzfläche (16) auf einem Kegel liegt.

11. Koaxialventil nach einem der vorhergehenden Ansprüche, bei dem bei einem Dreiwegeventil mindestens einer der beiden Ventilsitze (12) schwimmend gelagert ist, vorzugsweise beide.

12. Koaxialventil nach einem der vorhergehenden Ansprüche, bei dem der Ventilschließkörper (6) eine Lagerung aufweist.

13. Koaxialventil nach Anspruch 12, bei dem die Lagerung zwei im Endbereich des Ventilschließkörpers (6) angeordnete Gleitlager (13) aufweist.
